# EUROPÄISCHE PATENTSCHRIFT

(11) **EP 1 204 495 B1**
(45) Veröffentlichungstag und Bekanntmachung des Hinweises auf die Patenterteilung: **21.05.2003**
(21) Anmeldenummer: 00951170.0
(22) Anmeldetag: 16.08.2000
(51) Int. Cl.: B21D 53/04, B21D 39/04, F28F 3/14, F24J 2/20

(54) **WÄRMETAUSCHER**
HEAT EXCHANGER
ECHANGEUR DE CHALEUR

(30) Priorität: 20.08.1999 CH 152699
(43) Veröffentlichungstag der Anmeldung: 15.05.2002
(73) Patentinhaber: Roth, Max, 7310 Bad-Ragaz (CH)
(72) Erfinder: Roth, Max, 7310 Bad-Ragaz (CH)
(74) Vertreter: Walder, Martin Bernhard (CH)
(86) Internationale Anmeldenummer: CH0000434
(87) Internationale Veröffentlichungsnummer: WO01014080

(56) Entgegenhaltungen:
- EP-A- 0 822 026
- DE-A- 2 007 400
- DE-A- 2 604 879
- DE-A- 19 740 818
- DE-C- 19 754 185
- FR-A- 1 516 513
- FR-A- 2 652 016
- US-A- 5 581 860

## Beschreibung

### Technisches Gebiet der Erfindung

Die Erfindung betrifft ein Verfahren zur Herstellung eines Wärmetauschers mit einem Durchströmungsraum für ein Wärmetransportmedium, bei welchem zwei Wandungen einander gegenüber angeordnet und zu einem durchströmbaren Hohlkörper verbunden werden. Ferner betrifft die Erfindung einen Wärmetauscher mit zwei einander gegenüberliegenden und miteinander verbundenen Wandungen und dazwischen einem Durchströmungsraum für ein Wärmetransportmedium und die Verwendung eines Verfahrens zur punktuellen Verbindung von zwei flächig aneinander anliegenden Blechen.

### Stand der Technik

Zur Beförderung des Mediums wird in Wärmetauschern oft mit einem Überdruck von etwa 1,5*10⁵ Pa gearbeitet. Einem solchen oder höheren Überdruck müssen Wärmetauscher mit einem relativ hohen Durchsatz standhalten können. Daher werden in leistungsfähigen Wärmetauschem oft Rohre zur Durchleitung des Mediums verwendet und an diese Rohre Lamellen oder Blechflächen befestigt. Über die Rohroberfläche, vor allem aber über diese daran befestigten Blechflächen oder Lamellen geschieht der Wärmeaustausch zwischen dem Medium im Innern des Wärmetauschers und dem den Wärmetauscher umgebenden Medium.

Da die Wärmetransportwege und die Wärmeübergänge zwischen Blechflächen und Mediumrohr die Leistung eines Wärmetauschers beeinträchtigen, gibt es eine Vielzahl von Versuchen, möglichst grossflächige Wärmetauscherflächen direkt beidseitig mit den Medien in Berührung zu bringen. Dies ist insbesondere bei allen Flachwärmetauschern der Fall. Flachwärmetauscher weisen einen flächig ausgedehnten Durchströmungsraum für ein Wärmetransportmedium auf. Das Problem bei Flachwärmetauschern, welche eine möglichst grossflächige, auf der Innen- und der Aussenseite mit den Medien in Berührung stehende Wandung bei möglichst kleinem Innenvolumen aufweisen, ist der Druckunterschied zwischen Innendruck und Aussendruck. Dieser muss von einer mehr oder weniger ebenflächigen Wandung aufgenommen werden. Die beiden etwa parallel verlaufenden Wandungen werden von einem erhöhten Innendruck auseinandergepresst. Deshalb müssen sie an einer Vielzahl von Stellen innerhalb der Fläche zwischen den Rändern des Flachwärmetauschers miteinander verbunden sein (siehe z.B. DE-A-197 40 818). Die Zugbelastung auf die

Verbindungsstellen ist beträchtlich. Für eine diese Zugbelastung aufnehmende Verbindung von Blechen ist bisher praktisch nur das Schweissen in Frage gekommen.

Es sind Stahl-Flachwärmetauscher im Handel erhältlich, welche aus zwei vorgeformten, punktuell zusammengeschweissten Wandungen hergestellt sind. Dieses Herstellungsverfahren bedingt den Werkstoff Stahl oder Edelstahl (FE-Metalle). FE-Metalle sind aber keine optimalen Wärmeleiter. Um Flachwärmetauscher aus Kupfer, dem bezüglich Wärmeleitfähigkeit idealen Werkstoff, herstellen zu können, muss auf Nieten und Löten zurückgegriffen werden. Nieten hat jedoch den Nachteil, dass bei den Nietstellen beide Bleche perforiert sind und die Dichtigkeit dieser Stellen, wenn überhaupt, nur mit grossem Aufwand erreichbar ist. Leckagen entstehen gerne auch nachträglich, z.B. durch wärmebedingte Ausdehnung und Kontraktion der Bleche. Weich gelötete Lötstellen sind innerhalb der Fläche des Wärmetauschers kaum herstellbar und halten lediglich sehr geringen Zugbelastungen stand. Hartlöten hingegen glüht das Material aus und macht es noch weicher.

Es ist eine Pressformverbindung (z.B. Tox-Verbindung) bekannt, mit welcher Bleche aller Art miteinander verbunden werden können. In erster Linie ersetzt diese Pressformverbindung das Punktschweissen in der Autoindustrie, aber auch das Nieten im Flugzeugbau. Durch einen Stauch-Press-Vorgang werden Bleche absolut dicht und ohne Oberflächenbeschädigung oder Durchdringung verbunden. Mit einem einfachen Rundstempel werden zunächst die zu verbindenden Bleche zusammen in eine Matrize gepresst. Bei weiterem Kraftaufbau wird das stempelseitige Material gezwungen, innerhalb des matrizenseitigen Werkstoffes nach aussen diesen zu hinterfliessen. Dies wird dadurch ermöglicht, dass dem verdrängten matrizenseitigen Material ein Freiraum in der Matrize gegeben wird, in den es ausweichen kann. Nachträglich kann ein solcher Verbindungspunkt sogar wieder flach gepresst werden. Ähnliche formschlüssige Pressformverbindungen werden auch mit abgewandelter Technik erreicht.

Solche Pressformverbindungen werden dazu verwendet, flach aufeinanderliegende Bleche derart miteinander zu verbinden, dass eine genügende Scherzugkraft von der Verbindung aufgenommen werden kann. Die Bleche dürfen demnach durch Zug in der Ebene der Bleche nicht voneinander gelöst werden können. Auszugskräfte der Pressformverbindungen senkrecht zur Blechebene sind kaum bekannt. Auszugskräfte bei Kupferblechen sind gänzlich unbekannt. Fachleute schätzen die Verbindung von Kupferblechen mittels standardmässigen Pressformverbindungen als nicht stabil ein.

Die Pressformverbindung ist standardmässig kreisrund und wird in den Durchmessergrössen 3, 4, 5, 6, 8, 10 und 12 mm angeboten. Es wird empfohlen, jeweils den grösstmöglichen Durchmesser zu wählen, den die Platzverhältnisse zulassen.

### Aufgabe der Erfindung

Es ist nun Aufgabe der Erfindung, ein Verfahren zur Herstellung von Wärmetauschern vorzuschlagen, mit welchem eine Verbindung der beiden Wandungen erreicht wird, die einen Überdruck des in einer Kammer zwischen den Wandungen vorliegenden Innendrucks von beispielsweise bis zu 4, 6 oder 10 * 10⁵ Pa aushalten kann. Zudem soll das Verfahren die Möglichkeit bieten insbesondere auch Kupfer und andere Nicht-FE-Metalle für die zu verbindenden Wandungen verwenden zu können. Die Herstellung von Wärmetauschern soll möglichst kostengünstig sein und die Wärmetauscher sollen durch Form und Materialwahl auf die unterschiedlichsten Anwendungsgebiete ausgelegt werden können.

### Beschreibung der Erfindung

Diese Aufgabe wird durch die Merkmale der Ansprüche 1, 7, 15 oder 21 gelöst.

Erfindungsgemäss wird dies erreicht, indem zur Befestigung der Wandungen aneinander in der Fläche zwischen den Rändern des Wärmetauschers durch Verformung des Materials die Wandungen ineinander verzahnt werden. Die formschlüssige Verzahnung geschieht, ohne Verletzung der Wandung oder schädlicher Veränderung der Materialstruktur, lediglich durch einen Stauch-Press-Vorgang. Beide Wandungen sind danach frei von Durchbrüchen oder Rissen, so dass sogar ein Lösen der Verbindungsstelle keine Leckage zur Folge haben muss. Solche Verzahnungen können bei genügender Materialstärke der Wandung in der Art von Profilen linear ausgeführt werden.

Bevorzugt wird die Materialverformung punktuell ausgeführt. Unter punktueller Materialverformung wird verstanden, dass das Material an einer etwa kreisrunden Stelle mit Durchmesser je nach Materialstärke der zu verbindenden Wandungen und zu erwartender Belastung zwischen 2 und 15 mm, vorzugsweise zwischen 3 und 8 mm verformt wird. Bei einer Wandstärke von ca. 0,5 mm und einem Druckunterschied zwischen Innen- und Aussendruck von weniger als 4*10⁵ Pa wird ein Pressformpunkt-Durchmesser von 5 oder 6 mm vorgezogen. Anstelle einer kreisrunden Form kann die Verformung der Wandung auch eine vieleckige oder ovale Form aufweisen. Das Material der einen Wandung umfasst und hintergreift nach der gemeinsamen Verformung ringförmig Material der anderen Wandung. Eine solche kreisförmige oder punktuelle Pressformverbindung hält eine erstaunliche Zugbelastung senkrecht zur Blechebene aus. Der Grund dafür ist nicht bekannt. Es kann jedoch vermutet werden, dass bei Zugbelastung auf die Pressformverbindung an den verformten Stellen eine ringförmige Zugspannung in der einen und eine ringförmige Druckspannung in der anderen Wandung entsteht. Vermutlich dank der ringförmigen Struktur der Pressformverbindung kann sich in den verformten Partien eine sehr hohe Spannung aufbauen, ohne dass sich das Material der Wandung unter dem Einfluss des überhöhten Innendrucks soweit verformen würde, dass die Verbindung sich löst. Bei Kupferblech der Stärke 0.55 bis 0.65 mm ergibt sich ungefähr eine maximale Zugbelastung von gegen 40 kg pro punktueller Pressformverbindung mit Aussendurchmesser von 6 mm. Die Materialdicke der beiden Bleche zusammen wird dazu bis auf eine Dicke von 0,35 bis 0,45 mm zusammengepresst.

Vorteilhaft wird ein gut leitfähiges Metall, insbesondere Kupfer, für die Wandung verwendet. In gewissen Fällen, z.B. bei Sonnenkollektoren, welche immer nur einseitig Wärme aufnehmen müssen, werden die Wandungen unter Umständen vorteilhaft aus unterschiedlichem Material hergestellt. Dies ermöglicht, ein Material mit hoher Wärmeleitfähigkeit auf der einen Seite und ein Material mit niedriger Wärmeleitfähigkeit auf der anderen Seite zu verwenden, und beide miteinander zu verbinden. Auch die Verwendung von Kunststoff ist nicht auszuschliessen.

Die Herstellung von Wärmetauschern aus zwei unabhängigen Blechen oder einem zusammengefalzten Blech weist den Vorteil auf, dass eine endlose Bahn gefertigt werden kann. Die Blechbahn kann vor dem Verbinden geformt werden. Einer oder beide längs der Bahn verlaufenden Ränder können auf konventionelle Art, z.B. durch Verfälzen und Verlöten, verbunden und verschlossen werden.

Das Blech oder die Bleche, welche die zu verbindenden Wandungen bilden, werden vorteilhaft vor dem Verbinden vorgeformt. Als vorteilhafte Verformung des Bleches hat sich eine kreisrunde Vertiefung an den Stellen der Pressformverbindungen erwiesen. Die Vertiefung hat einen etwas grösseren Durchmesser als die Pressformverbindung und definiert den Abstand der beiden Wandungen und daher auch den durchfliessbaren Querschnitt des Flachwärmetauschers. Mit der Vertiefung wird aber auch eine Versteifung der Wandung im Bereich der Pressformverbindungen erreicht. Die Verbindungsstellen werden durch den Innendruck dank dieser Versteifung lediglich auf Zug senkrecht zur Blechebene belastet. Durch die versteifenden Vertiefungen wird verhindert, dass die Bleche am Rand der Pressformverbindungen verbogen werden. Ein solches Verbiegen der Blechwandung unmittelbar anschliessend an die Pressformverbindung würde dazu führen, dass die Verzahnung der beiden Wandungen sich infolge eines Abschälvorgangs lösen könnte. Die Belastung der Pressformverbindungen ist dank der versteifenden Vertiefung symmetrisch.

Bei der Verwendung von Kupferblech können die in den Vertiefungen liegenden Flächen derart behandelt werden, dass das Material an Steifigkeit gewinnt. Diese Behandlung erfolgt durch Reiben der Flächen vor dem Verbinden der Wandungen. Zusätzlich oder alternativ wird das Material auch versteift durch Bewegen der vertieften Flächen, indem der Innendruck im Wärmetauscher Schwankungen ausgesetzt wird. Auch mit Wärme-/Kältebehandlung kann gezielt das Kupfer versteift werden.

Diese Vertiefungen werden vorteilhaft in beiden Wandungen eingebracht und möglichst exakt Rücken gegen Rücken aufeinander gelegt. Die Vertiefungen weisen bei einem Pressformpunkt von 5 oder 6 mm Durchmesser einen Durchmesser von 8 bis 10 mm auf. Sie sind 1 bis 1,5 mm tief. Daraus ergibt sich ein 2 bis 3 mm starker Durchströmungsraum. Für grössere Dimensionen des Durchströmungsraums sind die Tiefen der Vertiefungen entsprechend anzupassen. Die Vertiefungen werden in Übereinstimmung gebracht, indem ein Blechband mit einer linearsymmetrischen Anordnung von Vertiefungen versehen wird und anschliessend entlang der Symmetrieachse zusammengefaltet wird. Alternativ werden zwei symmetrisch mit Vertiefungen versehene Bleche mit den vertieften Stellen aufeinandergelegt.

Vorteilhaft wird der Wärmetauscher vor dem Pressformverbinden ringsum verlötet. Dadurch kann vermieden werden, dass die Längenveränderung des Bleches (Ausdehnung von CU liegt bei 1.3-1,5 mm pro 100°C Temperaturunterschied und Laufmeter) infolge Materialerhitzung bis zu 270° C beim Löten dazu führt, dass randständige Pressformverbindungen gelöst werden.

Zwei einander gegenüberliegende Seitenkanten des Flachwärmetauschers werden zweckmässigerweise zur Längsversteifung gefälzt und wenigstens eine davon durch Löten verschlossen. Die andern zwei gegenüberliegenden Stirnkanten dienen als Anschlussseiten für das Wärmetransportmedium. Diese werden vorteilhaft mit einem Stirnrohr aus dem gleichen Metall, aus dem die Wandung besteht, bestückt. Dazu werden die Wandungsbleche rinnenförmig in Form gezogen oder gepresst und um ein mit Schlitzen oder Bohrungen versehenes Stirnrohr gelegt. Die Schlitze oder Bohrungen werden dabei auf den Durchströmungsraum ausgerichtet, so dass der Innenraum des Stirnrohrs mit dem Durchströmungsraum des Wärmetauschers verbunden ist. Danach wird das Stirnrohr und die Blechwandung miteinander verlötet. Dafür ist ein Tauchlötverfahren geeignet. Das Stirnrohr wird zweckmässigerweise wenigstens zur Hälfte seines Umfangs von den Blechwandungen umfasst, dadurch klemmt das Rohr zwischen den beiden viertelrund vorgeformten Stirnenden der Wandungen.

Damit die Ecken des Hohlkörpers dicht an das Stirnrohr anschliessen und durch das Tauchlöten sicher gedichtet werden, ist vorteilhaft eine an der Ecke des Hohlkörpers anzuordnende Öffnung am Stirnrohr mit einem in den Durchströmungsraum hineinreichenden Kragen versehen. Dieser kann aus dem Rohrwandungsmaterial herausgezogen sein. Alternativ kann auch ein den Hohlkörper seitlich überstehender Teil des Stirnrohrs von aussen um den Rand des Hohlkörpers herumgeformt werden. Dies erlaubt die Anordnung der Öffnungen mit Abstand zum Rand des Hohlkörpers, was wiederum ermöglicht, Steckverbindungen in das Stirnrohr einzufügen, welche nicht über die Breite des Hohlkörpers hinausreichen.

Die nach dem Tauchlöten mit Lot bedeckten Stirnrohrenden werden anschliessend ausgerieben und deren Innendurchmesser exakt auf ein bestimmtes Mass gebracht. Dieses Mass ist auf das Aussenmass eines Verbindungsstücks abgestimmt, welches mit einem oder mehreren, vorzugsweise zwei dichtenden O-Ringen in das Stirnrohrende eingeführt wird. Das Verbindungsstück dient dem Anschliessen des Wärmetauschers an ein System. Zu verschliessende Stirnrohrenden können mit einem Steckzapfen verschlossen werden. Denkbar ist auch eine Anordnung, bei der das Verbindungsstück das Stirnrohrende umschliesst. Das Stirnrohr kann auch irgendwo auf seiner Länge mit T-Stücken versehen werden. Diese sind ebenfalls mittels Steckverbindungen an Rohre oder andere Komponenten einer Anlage koppelbar.

Das Verbinden von Systemkomponenten mittels Steckverbindungen erleichtert den Zusammenbau und ermöglicht eine rasche Montage, die Verwendung von Normteilen wie Winkelstücken und anderen Fittings und eine unkomplizierte Anpassung einer bestehenden Anlage. Ein Baukasten mit beispielsweise fünf Flachwärmetauscherelementen und einer Kollektorfläche von einem Quadratmeter ist vorteilhaft mit Steckverbindungen bestückt. Dadurch wird die Selbstmontage begünstigt und erlaubt, eine Kollektoranlage auch vorübergehend, z.B. auf einem Wohnwagen oder Camper, zu installieren. Für den Transport, z.B. bei der Weiterreise mit dem Wohnmobil, kann diese Anlage rasch demontiert und deren Einzelteile verstaut werden. Solche Baukasten sind vorteilhaft mit einem Gestell für die Kollektoranlage, einer Pumpe, einem Warmwasserbehälter und allenfalls einem Expansionsgefäss ergänzbar.

Bei einem Wärmetauscher mit zwei miteinander verbundenen Wandungen und dazwischen einem Durchströmungsraum für ein Wärmetransportmedium sind erfindungsgemäss die Wandungen in der Fläche zwischen den Rändern des Wärmetauschers an einer Vielzahl von Stellen mit Verformungen der Wandungen ineinander verzahnt und dadurch aneinander befestigt.

Die Verformungen der Wandungen sind vorteilhaft punktuell. Solche Pressformverbindungen sind zweckmässigerweise in Reihen angeordnet. Sie sind vorteilhaft in einem gegenseitigen Abstand von 10 bis 50 mm, vorzugsweise zwischen 20 und 30 mm angeordnet. Je kleiner der Abstand ist, umso kleiner ist auch die durch die Pressformverbindung zusammenzuhaltende Wandungsfläche und die von der Verbindung auszuhaltende Zugbelastung. Je höher der Innendruck den Aussendruck übersteigt, desto dichter nebeneinander müssen demnach die Pressformverbindungen angeordnet werden. Weiter hat auch die Blechdicke Einfluss auf die vorteilhafte Distanz zwischen den Verbindungsstellen. Je dünner das Blech ist, desto dichter nebeneinander müssen die Verbindungsstellen angeordnet sein, um einer Verformung des Bleches unter der Betriebsbelastung entgegenzuwirken.

Vorteilhaft besteht wenigstens eine Wandung des Wärmetauschers aus Kupferblech, insbesondere der Stärke 0,3 bis 0,8 mm, vorzugsweise 0,5 bis 0,65 mm. Kupferblech ist der ideale Wärmeleiter und kann in der Fläche bisher auf keine andere als die erfindungsgemässe Weise dauerhaft und kostengünstig verbunden werden.

Zweckmässigerweise sind die punktuellen Verformungen in einem Raster angeordnet sind. Das Raster kann ein Dreieckraster, ein Quadrat- oder Rechteckraster sein. Bei einem Dreieckraster, insbesondere bei gleichseitigen Dreiecken, sind die Abstände zwischen den benachbarten Befestigungspunkten gleichmässiger als bei rechteckigen Rastern. Die Kräfte im Blech verteilen sich auch gleichmässiger, selbst im Vergleich zu der Kräfteverteilung in einem Blech mit Befestigungspunkten in einem Quadratraster.

Der Wärmetauscher weist in den Wandungen vorteilhaft kreisrunde Vertiefungen mit einem Durchmesser zwischen 6 und 15 mm, vorteilhaft zwischen 8 und 10 mm auf. Diese Vertiefungen sind 0,5 bis 3 mm, vorteilhaft 1 bis 1,5 mm tief und sind in den beiden Wandungen gleichermassen und einander gegenüberliegend ausgeformt. Die Vertiefungen stehen einander entgegen, so dass die Wandungen um diese Vertiefungen herum in einem Abstand voneinander gehalten werden, welcher der Summe der beiden Tiefen der Vertiefungen entspricht. Die Vertiefungen können in den gegenüberliegenden Wandungen unterschiedlich tief ausgebildet sein, sind zweckmässigerweise aber gleichmässig tief ausgebildet. Diese Vertiefungen sind unabhängig von der Art und Weise der Verbindung der beiden Blechwandungen von grossem Vorteil. Dank diesen versteifenden Vertiefungen wölbt sich die übrige Fläche des Wärmetauschers unter Druck kaum auf.

Dank diesen Vertiefungen bleiben die übrigen Flächen der Wandung praktisch ebenflächig, selbst wenn der Wärmetauscher unter Druck steht oder Temperaturschwankungen ausgesetzt wird. Dies erlaubt die Anordnung einer Fotovoltaikfolie auf einer Wandung des Flachwärmetauschers. Diese Fotovoltaikfolie arbeitet dank ihrer Kühlung durch das Wärmetransportmedium im Innern des Flachwärmetauschers auch bei hoher Wärmeeinstrahlung mit konstantem Wirkungsgrad.

Der Wärmetauscher weist zwei gegenüberliegende geschlossene Seitenkanten auf, welche parallel zur Durchströmungsrichtung verlaufen. An den beiden anderen Kanten sind Anschlüsse für Vor- und Rücklauf vorgesehen. Der Anschluss an der Stirnseite des Wärmetauschers wird vorteilhaft durch ein Stirnrohr gebildet, welches einen Standardquerschnitt aufweist. Das Stirnrohr ist an seinen Enden offen und gegen den Durchströmungsraum des Wärmetauschers hin mit Öffnungen versehen. Diese sind durch Einschnitte oder Bohrungen gebildet und weisen vorteilhaft Kragen auf, welche insbesondere an den Ecken des Hohlkörpers dicht an die Wandungen anschliessen.

Erfindungsgemäss wird daher zur Herstellung von durchströmbaren Wärmetauscher ein Verfahren zum Verbinden von zwei parallelen Blechen durch gemeinsames punktuelles Formverpressen der Bleche verwendet. Die Verwendung dieses Verfahrens weist dabei den Vorteil auf, dass das Ausgangsmaterial der Bleche in seiner Struktur nicht beeinträchtigt oder gar zerstört wird. Das Blech bleibt unverletzt, so dass die Dichtigkeit der Verbindungsstelle gewährleistet bleibt. Die Verbindung hält auch bei weichen Blechen wie Kupfer gegenüber herkömmlichen Verbindungen wie Löten überraschenderweise ein mehrfaches an Zugkräften senkrecht zu den Blechflächen aus, so dass ein Hohlraum zwischen den Blechen unter Druck gesetzt werden kann. Daher lassen sich die verschiedensten flächigen Gebilde mit einem durchströmbaren Hohlraum darin aus Kupferblech herstellen. Möglich ist die Herstellung von Ziegeln oder ganze Dachbahnen, Wärmetauschern für Kristallisatoren oder Destillatoren etc. aus Platin oder anderen katalytischen Metallen, oder von Kühlflächen oder Abwärme abgebende Flächen für Klimaanlagen, um nur einige wenige Anwendungen zu nennen.

Bei einem Verfahren zur Herstellung eines Wärmetauscher mit einem Durchströmungsraum für ein Wärmetransportmedium, bei welchem zwei Wandungen einander gegenüber angeordnet und zu einem durchströmbaren Hohlkörper miteinander verbunden werden, wobei die Wandungen an einer Vielzahl von Verbindungsstellen innerhalb der Fläche zwischen den Rändern des Hohlkörpers aneinander befestigt werden, hat es sich unabhängig der Verbindungsart als sehr vorteilhaft erwiesen, dass in wenigstens einer, vorzugsweise beiden Wandungen an den Verbindungsstellen innerhalb der Fläche zwischen den Rändern des Hohlkörpers durch Verformung des Materials versteifende, kreisrunde Vertiefungen ausgeformt werden. Die Blechwandungen werden danach innerhalb dieser Vertiefungen durch eine Material- oder eine Formschlussverbindung miteinander verbunden. Ein nach diesem Verfahren hergestellter Wärmetauscher weist formstabile Wandungen auf. Vorteilhaft sind die Vertiefungen in einem Raster angeordnet und ist der Rasterabstand der Verbindungsstellen auf die Blechdicke und Materialeigenschaften angepasst.

### Kurzbeschreibung der Figuren

Nachfolgend wird die Erfindung anhand von in den Figuren dargestellten Beispielen näher erläutert. Es zeigt
- Figur 1:: einen Schemaschnitt durch einen mittels Formverpressung erreichten Befestigungspunkt zwischen zwei Blechen gemäss dem Stand der Technik,
- Figur 2:: eine Schemazeichnung eines erfindungsgemässen Flachwärmetauschers,
- Figur 3:: einen schematischen Schnitt durch die Befestigungspunkte eines Flachwärmetauschers,
- Figur 4:: ein Wärmetauscher aus einem Rohr,
- Figur 5:: eine schematische Darstellung der Herstellung eines erfindungsgemässen Flachwärmetauschers mit vorgeformten Blechen,
- Figur 6:: eine schematische Darstellung eines Bleches mit an den für die Befestigungspunkte vorgesehenen Stellen ausgeformten Vertiefungen, welche symmetrisch zu einer Fattlinie des Bleches angeordnet sind,
- Figur 7:: das Blech gemäss Figur 6 zusammengefaltet und mit Pressformverbindungen teilweise zusammengeheftet,
- Figur 8:: ein Flachwärmetauscher mit Stirnrohren,
- Figur 9:: einen Querschnitt durch einen Pressformpunkt beim Wärmetauscher gemäss Figur 8,
- Figur 10:: ein Steckverbinder für den Anschluss des Flachwärmetauschers gemäss Figur 8,
- Figur 11:: eine einfache Warmwasseraufbereitungsanlage,
- Figur 12:: eine Warmwasseraufbereitungsanlage mit Pumpe, Warmwasserspeicher und Expansionsgefäss.

### Beschreibung der Ausführungsbeispiele

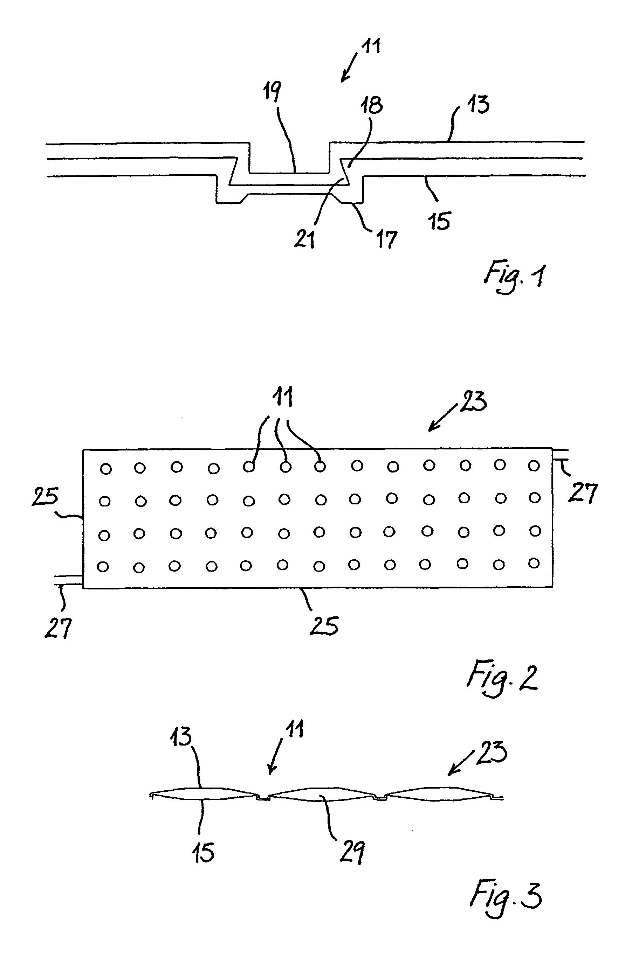

Die Pressformverbindung 11, welche in Fig. 1 in einem schematischen Schnitt dargestellt ist, entspricht dem Stand der Technik und ist als Alternative zum Punktschweissen insbesondere für die Autoindustrie entwickelt worden. Mit solchen Pressformverbindungen 11 lassen sich flach aufeinander liegende Bleche 13,15 innert Sekunden an einer Vielzahl von Stellen verbinden. Die Verbindung 11 überträgt Zug und Scherkräfte. Sie wird durch beidseitiges Anpressen von Pressformen an die Bleche 13,15 hergestellt. Das Blech 13 wird durch die in der Fig. 1 von oben wirkende Pressform nach unten in eine Gegenform ausgestülpt. Das untere Blech 15 wird gleichzeitig mit dem oberen Blech 13 nach unten ausgebuchtet. Die Gegenform der von unten wirkenden Pressform weist am Grund der Form eine ringförmige Vertiefung und eine zentrale Erhöhung auf. Das in die Gegenform gepresste Material wird daher in diese ringförmige Vertiefung gepresst und bildet eine ringförmige Verdickung 17. Es sind mehrere Varianten von Verfahren zum Pressformverbinden bekannt, mit denen ein vergleichbares Resultat erreicht wird.

Trotzdem die beiden Pressformen zur Druckrichtung des Stempels etwa parallele Formenwände aufweisen, entsteht eine Verzahnung zwischen den beiden Blechen. Das untere Blech 15 umfasst das nach unten gepresste Blechstück 19 des oberen Bleches 13 mit einem Vertiefungsrand 18 in einem engeren Radius als dem äusseren Radius des nach unten gepressten Stückes 19. Das nach unten gepresste Blechstück 19 weicht bei der Pressung dem Druck dadurch aus, dass es sich quer zur Druckrichtung ausdehnt und so unter dem unteren Blech 15 eine Krone 21 bildet. Diese Krone 21 weist einen grösseren Radius auf als der engste Radius des unteren Bleches 15 im verformten Bereich. Dadurch verkrallen sich die Bleche 13,15 mit der Krone 21 und dem Vertiefungsrand 18 derart ineinander, dass sie in der Regel nicht ohne Verletzung des Bleches auseinandergenommen werden können.

Diese Verformung kann linear ausgeführt werden. Damit die durch den Gebrauch des Flachwärmetauschers in der Krone 21 und dem Vertiefungsrand 18 auftretenden Kräfte nicht eine Loslösung der beiden Bleche 13,15 voneinander bewirken, ist die Pressformverbindung 11 vorteilhaft punktuell, bzw. ringförmig. ausgebildet.

Die Figur 2 zeigt ein Sonnenkollektorpanel 23. Zwei Kupferblechwandungen 13,15, von welchen lediglich die eine sichtbar ist, sind mit einer Vielzahl von punktuellen Pressformverbindungen 11 verbunden. Diese sind in einem Quadratraster angeordnet. Die Ränder 25 sind traditionell mit verlöteten Fälzen verbunden und gedichtet. An diagonal gegenüberliegenden Ecken sind Rohre 27 eingelötet. Die Bleche 13,15 wurden flach aufeinander liegend miteinander verbunden und liegen auch nach Fertigstellung des Kollektors noch flach aufeinander. Der Durchströmungsraum für ein Wärmetransportmedium wird erst nach der Fertigstellung des Kollektors 23 aufgeweitet, indem dieser unter Druck gesetzt wird. Mit z.B. 4 Atmosphären (4*10⁵ Pa) Druck wird der aus 0,2 mm starkem Blech gefertigte Hohlkörper aufgeblasen. Die Blechwandungen 13,15 verformen sich dabei, die Aussenmasse des Hohlkörpers 23 werden etwas kleiner, und der Durchströmungsraum wird geöffnet.

In Figur 3 ist schematisch ein Schnitt durch einen aufgeblasenen Hohlkörper 23 dargestellt. In den Befestigungspunkten 11 bleiben die Blechwandungen 13, 15 verbunden und in engster Berührung. Dazwischen vermag der Aufblähdruck oder Prüfdruck zur Prüfung der Dichtheit des Kollektorelementes 23 die Wandungen 13,15 auseinander zu drücken. Dadurch entsteht ein Durchströmungsraum 29 zwischen den Wandungen 13,15. Der Durchströmungsraum 29 ist im Verhältnis zur Kollektorfläche sehr klein und ist praktisch vollflächig vorhanden. Die Kollektorfläche wird an beinahe jeder Stelle direkt auf der Rückseite gekühlt. Ausnahmen davon bilden lediglich die Pressformverbindungspunkte 11. Diese weisen jedoch einen sehr geringen Durchmesser von ca. 6 mm auf, so dass die Wärmetransportwege sehr kurz bleiben.

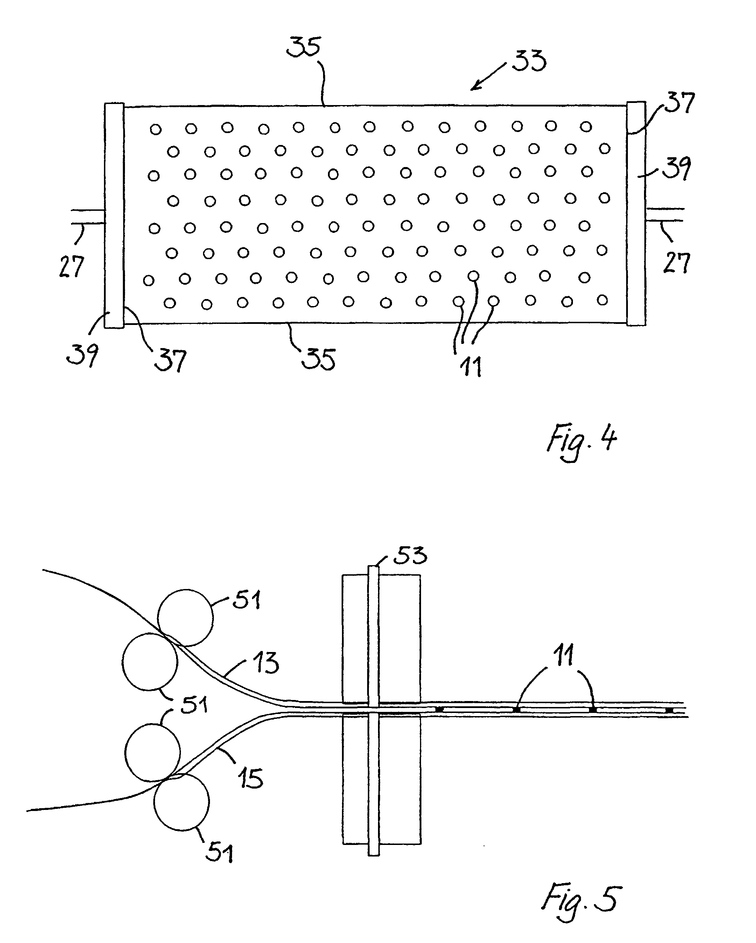

Figur 4 zeigt ein Kollektor- oder Wärmetauscherelement 33, welches aus einem Rohr hergestellt ist. Die Ränder 35 sind entsprechend durch eine Biegekante des Rohres gebildet. Die vordere und hintere Wandungsfläche zwischen den Rändern 35 sind mit einer Vielzahl von Pressformverbindungen 11 aneinander befestigt. Die Ränder 37 an den Rohrenden sind mit je einem Endstück 39 abgeschlossen. Am Endstück 39, z.B. einem tiefgezogenen Blechteil, sind Zu- und Ableitungen 27 angeschlossen. Die Pressformverbindungen 11 bilden einen Dreieckraster. Um jeden Verbindungspunkt 11 herum sind in einem praktisch regulären Sechseck sechs weitere Verbindungspunkte 11 angeordnet. Wird das Raster beispielsweise noch um 30 Grad verdreht angeordnet, so geschieht die Durchströmung des Hohlkörpers 33 nicht mehr in Kanälen, welche geradlinig von einem Ende zum andern reichen, sondern das Wärmetransportmedium muss sich um die Befestigungspunkte 11 herumschlängeln. Dies ergibt eine bessere Durchmischung von kühlerem und heisserem Medium.

Eine weitere Möglichkeit zur Ausbildung des Durchströmungsraumes besteht darin, die Wandungen vorgängig zu formen. In Figur 5 ist eine Einrichtung schematisch dargestellt, mit der die Bleche zuerst vorgeformt und dann miteinander verbunden werden. Durch die Rollenpressen 51 werden zwei Blechbahnen 13 und 15 einzeln geformt. Anschliessend werden die Bahnen 13,15 zusammengefügt. Die beiden Bahnen 13,15 werden dazu mit einem Stempel 53 an den Berührungsstellen verbunden.

Eine Verformung der Wandungen um die Befestigungspunkte herum hat sich als vorteilhaft erwiesen. Mit kreisrunden Vertiefungen bzw. Erhöhungen 59 an den beiden Wandungen 13 und 15, welche Vertiefungen einander gegenüberliegend und entgegengesetzt ausgeformt werden, wird erreicht, dass die Wandungen 13 und 15 in einem durch die Tiefe der Vertiefung 59 bestimmbaren Abstand voneinander gehalten sind.

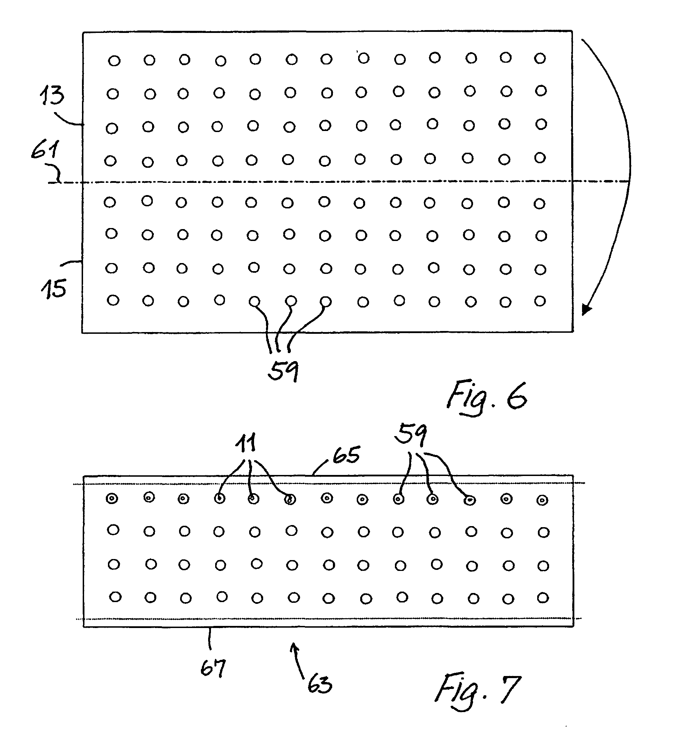

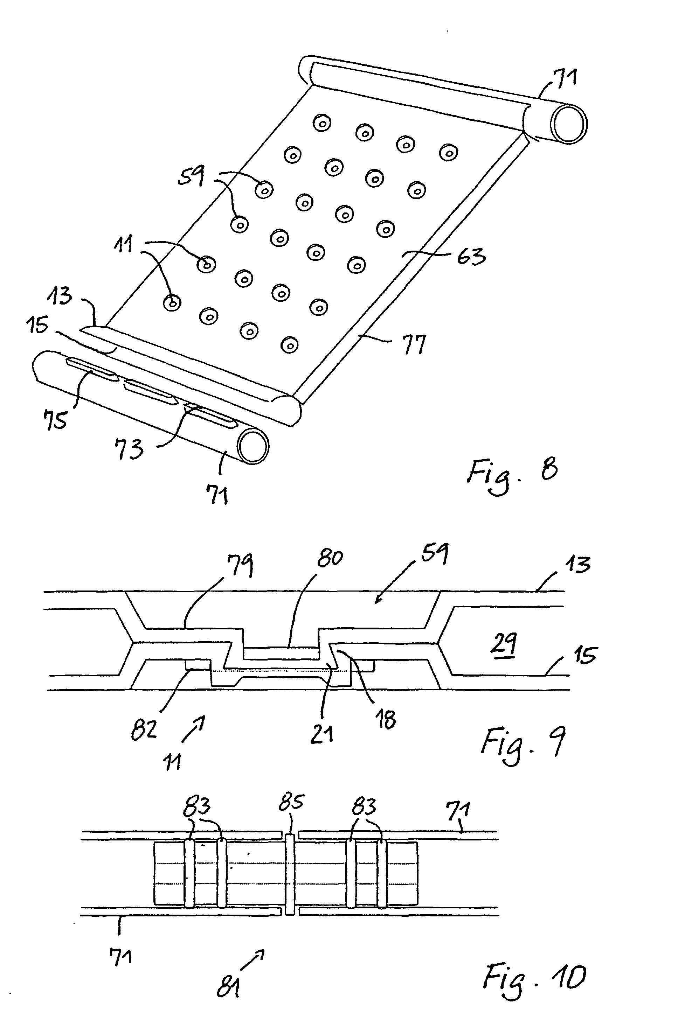

Figur 6 zeigt ein vorgeformtes Blech, welches dazu geeignet ist, entlang der Symmetrieachse 61 der Anordnung von solchen vorgeformten Vertiefungen 59 zusammengelegt zu werden (siehe Pfeil). Durch das Zusammenlegen entlang der Symmetrieachse 61 gelangen die Vertiefungen 59 jeweils in Berührung miteinander. Der dadurch erhaltene Hohlkörper 63 ist in Figur 7 dargestellt. Bei der Herstellung von Flachwärmetauschern werden anschliessend die Seitenränder 65 und 67 dieses Hohlkörpers entlang der punktierten Linie z.B. senkrecht umgefaltet und die nicht verbundene Seite 67 verlötet. Der Seitenrand 65 bleibt beim Zusammenfalten des Bleches gemäss Figur 6 geschlossen und dicht und braucht nicht verlötet zu werden. An den Stirnseiten 69 werden die Wandungen 13 und 15 aufgeweitet, so dass sie Stirnrohre 71 (Fig. 8) aufnehmen können. Nach dem Verlöten der Stirnrohre werden die Pressformverbindungen 11 jeweils zentrisch in den Vertiefungen 59 ausgebildet.

Figur 8 zeigt einen praktisch fertigen Flachwärmetauscher. Damit die Schlitze 73 in den Stirnrohren 71 in der Darstellung gezeigt werden können, ist ein Stirnrohr 71 vom Hohlkörper 63 gelöst dargestellt. An den Stirnseiten des Hohlkörpers 63 sind die Kupferblech-Wandungen 13 und 15 in entgegengesetzter Richtung viertelrund aufgeweitet, so dass sie zusammen eine Rinne mit etwa halbkreisförmigen Querschnitt bilden. In dieser Rinne ist das Stirnrohr 71 eingelötet. Am Stirnrohr 71 aus Kupfer sind mehrere Öffnungen 73 ausgebildet. Diese liegen in einer Linie parallel zur Achse des Rohres. Sie sind gegen den Durchströmungsraum 29 zwischen den beiden Wandungen 13 und 15 gerichtet. Die Öffnungen 73 weisen kalt gezogene Kragen 75 auf. Der Kragen 75 reicht beim fertigen Wärmetauscher in den Durchströmungsraum 29 hinein und ist wenigstens in den Eckbereichen des Hohlkörpers 63 mit den Wandungen 13,15 verlötet.

Die Wandungen 13,15 sind an den Seitenrändern 77 gemeinsam etwa rechtwinklig zur Fläche des Hohlkörpers 63 abgewinkelt und bilden eine Versteifung des Hohlkörpers 63. In den die Fläche des Hohlkörpers 63 bildenden Wandungen 13,15 sind Vertiefungen 59 vorgesehen. Diese sind in einem Rechteckraster von 25 mm Rastermass angeordnet und weisen einen Durchmesser von 8 mm auf. Die Pressform-Verbindungspunkte 11 sind mitten in den Vertiefungen angeordnet und weisen einen Durchmesser von 6 mm auf. Die Tiefe der Vertiefungen 59 beträgt 1 mm und die Weite des Durchströmungsraumes 29 entsprechend 2 mm. Dies ergibt bei einem Wärmetauscher mit den Aussenabmessungen 20 * 100 cm einen Inhalt von 200 ml oder einen Liter Wärmetransportmedium auf einen Quadratmeter Kollektorfläche.

Solche Wärmetauscher sind in beinahe beliebigen Abmessungen herstellbar. Serien mit genormten Abmessungen erlauben ein aneinanderreihen der Wärmetauscher zu einer grösseren Fläche oder einem Paket. Durch entsprechende Verrohrung können die einzelnen Wärmetauscher ohne Änderung der Anschlüsse oder Form in Serie oder parallel angeordnet werden.

Der Hohlkörper 63 kann auch eine beliebige vorbestimmte Form aufweisen. Soll der Hohlkörper z.B. die Form einer Regenrinne aufweisen, so werden zwei Bleche 13,15 parallel geformt und eine doppelwandige Regenrinne hergestellt. Danach werden die Blechwandungen 13,15 an den Verbindungsstellen 11 und den Rändern verbunden. So kann der Wärmetauscher eine fast beliebige Form aufweisen.

Figur 9 zeigt einen Querschnitt durch eine Verbindungsstelle 11 mit einer Vertiefung 59 und einer Pressformverbindung. An den Verbindungsstellen sind die die Wandung des Wärmetauschers bildenden Bleche 13 und 15 kreisrund verformt. Die Verformung 59 bildet eine Vertiefung auf der einen Seite und eine Erhöhung auf der andern Seite des Bleches 13,15 mit einer zur übrigen Blechfläche parallelen Verbindungsfläche 79. Die erhöhte Fläche der Erhöhung bildet eine Auflagefläche für die Auflage des zweiten Bleches (13,15). Sie ist gegenüber der übrigen Wandung um 1 mm, allenfalls um 1,5 bis 2 mm erhöht. Solche Verformungen können mittels Rollenpressen serienweise oder auch mittels Einzelpressen in das Blech gearbeitet werden. Vorteilhaft wird diese verformte Fläche eingepresst und mit einem auf die Fläche aufgebrachten Drehmoment das Material Verbindungsfläche 79 versteift. Das versteifte Material zweier Rücken gegen Rücken mit den verformten Verbindungsflächen 79 aufeinander gelegter Bleche kann nun mittels eines Pressformpunktes wie dargestellt oder mittels einer anderen Verbindungsart zentral innerhalb dieser vertieften Verbindungsfläche 79 verbunden werden. Die Vertiefungen 59 gewährleisten einen definierten Durchströmungsraum 29 und, in Verbindung mit einer rasterförmigen Anordnung der Verformungen und einem maximalen Abstand der Verbindungsstellen 11, eine formstabile Oberfläche des Wärmetauschers.

Die Pressformverbindung 11 in Figur 9 ist zusätzlich mit die Verbindung sichernden Teilen 80,82 ausgerüstet. Diese Teile 80,82 sind aus Messing, da dieses härter als Kupfer ist und einen geringeren temperaturabhängigen Ausdehnungskoeffizienten aufweist. Eine Scheibe 80 ist in die eingestempelte Vertiefung in der Pressformverbindung 11 eingepresst und ein Ring 82 umfasst die in die Matrize gepresste Ausstülpung der Pressformverbindung 11. Scheibe und Ring zusammen sichern die Verkrallung zwischen Vertiefungsrand 18 und Krone 21. Diese Stabilisierung der Pressformverbindung erlaubt eine höhere Belastung bezüglich Temperaturschwankungen und gewährleistet eine höhere Verbindungskraft. Sie kann zweckmässigerweise bei Hochdruckwärmetauschern oder bei Wärmetauschern mit hohen Temperaturunterschieden angewendet werden.

Die Verbindung zwischen dem Wärmetauscher und Vor- und Rücklauf bzw. dem benachbarten Wärmetauscher erfolgt vorteilhaft über Steckverbinder. Ein solcher ist in Figur 10 dargestellt. Der Steckverbinder 81 besteht aus einem Rohr. Dieses Rohr ist nahe den beiden Enden mit je zwei umlaufenden Nuten versehen, in welchen jeweils ein O-Ring 83 liegt. Die Dimensionen des Aussendurchmessers und des 0-Ringes des Steckverbinders sind auf den Innendurchmesser des zu verbindenden Rohres, d.h. des Stirnrohrs, abgestimmt. Damit der Steckverbinder 81 sich gleichmässig in die beiden zu verbindenden Rohrenden einstecken lässt, ist mittig ein Anschlag 85 vorgesehen. Dieser ist durch eine Vergrösserung des Durchmesser gebildet.

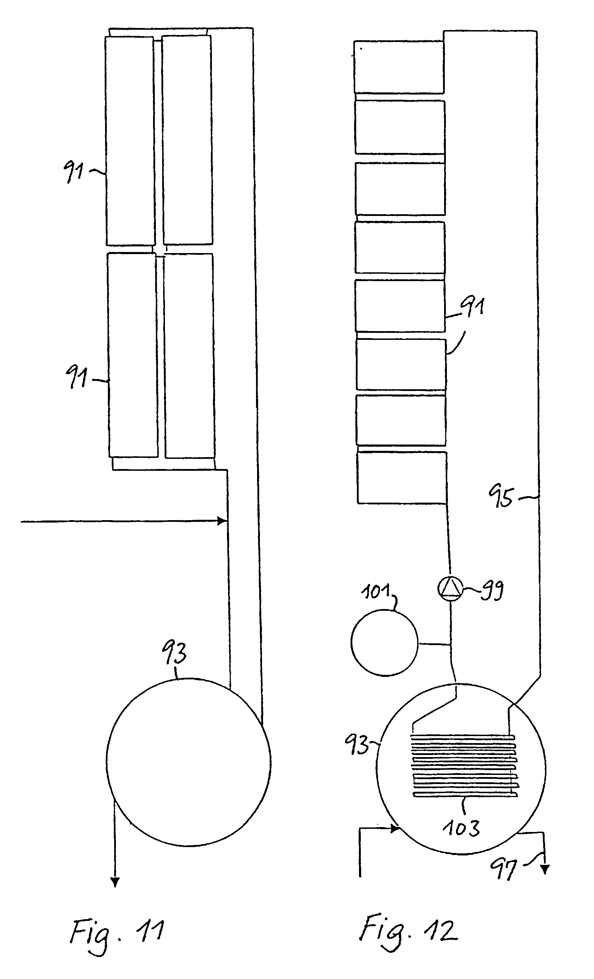

Figur 11 zeigt eine einfache Warmwasseranlage mit vier zusammengefügten Sonnenkollektorelementen 91 und einem Warmwasserspeicher 93. Das Verbrauchswasser wird direkt in den Kollektoren 91 aufgeheizt. Der Speicher 93 ist in einem Kreislauf mit den Kollektoren 91 verbunden. Eine noch einfachere Variante kommt ohne Warmwasserspeicher 93 aus. In Figur 12 ist eine aufwendigere Warmwasseraufbereitungsanlage dargestellt, bei der der Kollektorkreislauf 95 vom Verbrauchwasserkreislauf 97 getrennt ist. Der Kollektorkreislauf 95 wird durch eine Pumpe 99 angetrieben. Er besitzt ein Expansionsgefäss 101. Im Warmwasserbehälter ist ein Wärmetauscherregister 103 angeordnet, mit welchem das in den Kollektoren 91 aufgewärmte Wasser die Wärme an das Verbrauchwasser weitergibt. Aus Figuren 11 und 12 ist auch ersichtlich, dass unterschiedlichste Anordnungen von Kollektorelementen 91 möglich sind.

## Patentansprüche

1. Verfahren zur Herstellung eines Wärmetauschers (23,33,59) mit einem Durchströmungsraum (29) für ein Wärmetransportmedium, bei welchem zwei Wandungen (13,15), insbesondere aus Kupferblech, einander gegenüber angeordnet und zu einem durchströmbaren Hohlkörper (23,33,59) miteinander verbunden werden, wobei die Wandungen an einer Vielzahl von Verbindungsstellen (11) innerhalb der Fläche zwischen den Rändern des Hohlkörpers (23,33,59) aneinander befestigt werden, **dadurch gekennzeichnet, dass** die beiden Wandungen (13,15) an den Verbindungsstellen (11) innerhalb der Fläche zwischen den Rändern des Hohlkörpers (23,33,59) durch Verformung des Materials ineinander verzahnt werden.

2. Verfahren nach Anspruch 1, **dadurch gekennzeichnet, dass** die Materialverformung punktuell, vorzugsweise mit einem Durchmesser von 3 bis 6 mm, ausgeführt wird.

3. Verfahren nach Anspruch 1 oder 2, **dadurch gekennzeichnet, dass** wenigstens eine, vorzugsweise beide Wandungen mit kreisrunden Vertiefungen versehen werden und die Verbindungen im Bereich der Vertiefungen mit allseitigem Abstand zu deren Rand ausgeführt werden.

4. Verfahren nach einem der Ansprüche 1 bis 3, **dadurch gekennzeichnet, dass** die Wandungen vor dem Verbinden vorgeformt werden.

5. Verfahren nach einem der Ansprüche 1 bis 5, **dadurch gekennzeichnet, dass** der Hohlkörper (23,33,59) einem gegenüber dem Aussendruck überhöhten Innendruck ausgesetzt wird.

6. Verfahren nach einem der Ansprüche 1 bis 5 in Verbindung mit Anspruch 2, **dadurch gekennzeichnet, dass** die Verzahnung der Wandungen durch aufpressen eines Rings um die Verformung und einsetzen einer Scheibe in der Verformung stabilisiert wird.

7. Wärmetauscher (23,33,59) mit zwei miteinander verbundenen Wandungen (13,15) und dazwischen einem Durchströmungsraum (29) für ein Wärmetransportmedium, bei welchem die Wandungen (13,15) in der Fläche zwischen den Rändern des Wärmetauschers (23,33,59) an einer Vielzahl von Verbindungsstellen (11) miteinander verbunden sind, **dadurch gekennzeichnet, dass** die Wandungen (13,15) an den Verbindungsstellen (11) in der Fläche zwischen den Rändern des Wärmetauschers ineinander verzahnt und durch diese Verzahnungen (11) aneinander befestigt sind.

8. Wärmetauscher nach Anspruch 7, **dadurch gekennzeichnet, dass** die gegenseitigen Verzahnungen (11) der Wandungen (13,15) ringförmig ausgebildet sind.

9. Wärmetauscher nach Anspruch 8, **dadurch gekennzeichnet, dass** ein die verzahnte Stelle (11) umfassender Ring (82) vorgesehen ist.

10. Wärmetauscher nach einem der Ansprüche 7 bis 9, **dadurch gekennzeichnet, dass** die Verzahnungen (11) durch einen Stauch-Press-Vorgang und ohne Durchdringung des Bleches hergestellt sind.

11. Wärmetauscher nach einem der Ansprüche 7 bis 10, **dadurch gekennzeichnet, dass** wenigstens eine Wandung aus Kupferblech, insbesondere der Stärke 0,3 bis 0,8 mm, vorzugsweise 0,5 bis 0,65 mm, besteht.

12. Wärmetauscher nach einem der Ansprüche 7 bis 11, **dadurch gekennzeichnet, dass** die Verzahnungen (11) mit einem gegenseitigen Abstand von 10 bis 50 mm, vorzugsweise zwischen 20 und 30 mm angeordnet sind.

13. Wärmetauscher nach einem der Ansprüche 7 bis 12, **dadurch gekennzeichnet, dass** die Verzahnungen (11) in Reihen oder einem Raster angeordnet sind.

14. Wärmetauscher nach einem der Ansprüche 7 bis 13, **dadurch gekennzeichnet, dass** die Verzahnungen (11) innerhalb einer etwa kreisrunden Vertiefung (59) der Wandung angeordnet sind.

15. Verwendung eines Pressform-Blechverbindungsverfahrens zur punktuellen gegenseitigen Befestigung (11) von zwei einen Durchströmungsraum (29) eines Wärmetauschers umschliessenden parallelen Wandung (13,15) aneinander, gemäß Anspruch 1.

16. Bausatz für eine Wärmetauscheranlage, mit einer Mehrzahl von Wärmetauschern gemäss einem der Ansprüche 6 bis 12 und Verbindungselementen für die Anschlüsse der Wärmetauscher.

17. Bausatz nach Anspruch 16, **dadurch gekennzeichnet, dass** die Verbindungselemente Steckverbinder sind.

18. Bausatz nach Anspruch 16 oder 17, mit einer Pumpe.

19. Bausatz nach einem der Ansprüche 16 bis 18 mit einem Warmwasserbehälter.

20. Verfahren nach Anspruch 1, **dadurch gekennzeichnet, dass** in wenigstens einer, vorzugsweise beiden Wandungen (13,15) an den Verbindungsstellen (11) innerhalb der Fläche zwischen den Rändern des Hohlkörpers (23,33,59) durch Verformung des Materials versteifende, kreisrunde Vertiefungen (59) ausgeformt werden und die Blechwandungen danach innerhalb dieser Vertiefungen (59) durch Verformung des Materials ineinander verzahnt werden.

21. Wärmetauscher hergestellt nach dem Verfahren gemäss Anspruch 20, mit einem Durchströmungsraum (29) für ein Wärmetransportmedium, bei welchem zwei Wandungen (13,15) einander gegenüber angeordnet und zu einem durchströmbaren Hohlkörper (23,33,59) miteinander verbunden sind, wobei die Wandungen an einer Vielzahl von Verbindungsstellen (11) innerhalb der Fläche zwischen den Rändern des Hohlkörpers (23,33,59) aneinander befestigt sind, **dadurch gekennzeichnet, dass** in wenigstens einer, vorzugsweise beiden Wandungen (13,15) an den Verbindungsstellen (11) innerhalb der Fläche zwischen den Rändern des Hohlkörpers (23,33,59) durch Verformung des Materials versteifende, kreisrunde Vertiefungen (59) ausgeformt sind und die Blechwandungen danach innerhalb dieser Vertiefungen (59) durch Verformung des Materials ineinander verzahnt sind.

## Claims

1. A method for producing a heat exchanger (23, 33, 59) having a flow-through chamber (29) for a heat transfer medium, in which two walls (13, 15), in particular of sheet copper, are disposed facing one another and are joined to make a hollow body (23, 33, 59) through which a medium can flow, and the walls are fastened to one another at a plurality of connecting points (11) inside the surface between the edges of the hollow body (23, 33, 59), **characterized in that** the two walls (13, 15) are made to mesh with one another inside the surface between the edges of the hollow body (23, 33, 59) by deformation of the material.

2. The method of claim 1, **characterized in that** the material deformation is performed in punctate fashion, preferably with a diameter of from 3 to 6 mm.

3. The method of claim 1 or 2, **characterized in that** at least one and preferably both walls are provided with circular indentations, and the connections are made in the region of the indentations with spacing on all sides from the edge thereof.

4. The method of one of claims 1-3, **characterized in that** the walls are preshaped prior to being joined.

5. The method of one of claims 1-5 in connection with claim 2, **characterized in that** the hollow body (23, 33, 59) is exposed to an internal pressure that is elevated compared to the external pressure.

6. The method of one of claims 1-5, **characterized in that** the denticulation of the walls is stabilized by pressing on a ring around the deformation and inserting a disk in the deformation.

7. A heat exchanger (23, 33, 59) with two joined- together walls (13, 15) and between them a flow-through chamber (29) for a heat transfer medium, in which the walls (13, 15) are joined together at a plurality of connecting points (11) inside the surface between the edges of the heat exchanger (23, 33, 59), **characterized in that** the walls (13, 15) are made to mesh with one another at the connecting points (11) inside the surface between the edges of the heat exchanger and are fastened to one another by means of these denticulations (11).

8. The heat exchanger of claim 7, **characterized in that** the mutual denticulations (11) of the walls (13, 15) are embodied annularily.

9. The heat exchanger of claim 8, **characterized in that** a ring (82) encompassing the meshed place (11) is provided.

10. The heat exchanger of one of claims 7-9, **characterized in that** the denticulations (11) are produced by an upsetting-pressing process and without penetration of the sheet metal.

11. The heat exchanger of one of claims 7-10, **characterized in that** at least one wall comprises sheet copper, in particular with a thickness of from 0.3 to 0.8 mm, preferably 0.5 to 0.65 mm.

12. The heat exchanger of one of claims 7-11, **characterized in that** the denticulations (11) are disposed with a mutual spacing of from 10 to 50 mm, and preferably of between 20 and 30 mm

13. The heat exchanger of one of claims 7-12, **characterized in that** the denticulations (11) are disposed in rows or in a grid pattern.

14. The heat exchanger of one of claims 7-13, **characterized in that** the denticulations (11) are disposed inside an approximately circular indentation (59) of the wall.

15. The use of a compression-molding sheet-metal joining method for mutual punctate fastening (11) of two parallel walls (13, 15) that enclose a flow-through chamber (29) of a heat exchanger according to claim 1.

16. A construction kit for a heat exchanger system, having a plurality of heat exchangers as defined by one of claims 6-12 and having connecting elements for the connections of the heat exchangers.

17. The construction kit of claim 16, **characterized in that** the connecting elements are plug connectors.

18. The construction kit of claim 16 or 17, having a pump.

19. The construction kit of one of claims 16-18, having a hot-water tank.

20. A method according to claim 1, **characterized in that** in at least one and preferably both walls (13, 15) at the connecting points (11) inside the surface between the edges of the hollow body (23, 33, 59), circular indentations (59) that provide reinforcement by deformation of the material are shaped out, and the sheet-metal walls are subsequently meshed with one another inside these indentations (59) by means of deformation of the material.

21. A heat exchanger produced by the method of claim 20, the heat exchanger (23, 33, 59) having a flow-through chamber (29) for a heat transfer medium, in which two walls (13, 15), are disposed facing one another and are joined together to make a hollow body (23, 33, 59) through which a medium can flow, and the walls are fastened to one another at a plurality of connecting points (11) inside the surface between the edges of the hollow body (23, 33, 59), **characterized in that** in at least one wall, preferably in both walls at the connecting points (11) inside the surface between the edges of the hollow body (23,33,59), circular indentations (59) that provide reinforcement by deformation of the material are shaped out, and the sheet-metal walls are subsequently mesched with one another inside these indentations (59) by means of deformation of the material.

## Revendications

1. Procédé pour la construction d'un échangeur de chaleur (23, 33, 59) comportant un espace de circulation à contre-courant (29) pour un agent transporteur de chaleur, espace dans lequel deux parois (13, 15) en particulier en tôle de cuivre sont disposées l'une en face de l'autre et réunies ensemble par un corps creux (23, 33, 59) pouvant être parcouru à contre-courant, les parois étant fixées l'une à l'autre en une pluralité d'emplacements de liaison (11) à l'intérieur des surfaces situées entre les bords du corps creux (23, 33, 59), **caractérisé en ce que** les deux parois (13, 15) sont indentées aux emplacements de liaison (11) par déformation de matière à l'intérieur des surfaces situées entre les bords du corps creux (23, 33, 59).

2. Procédé selon la revendication 1 **caractérisé en ce que** la déformation de matière est réalisée par points de préférence avec un diamètre de 3 à 6 mm.

3. Procédé selon la revendication 1 ou 2 **caractérisé en ce que** au moins l'une et de préférence les deux parois présentent des enfoncements arrondis et les liaisons sont réalisées dans la zone des enfoncements avec un espacement sur tous les côtés par rapport à leur bord.

4. Procédé selon l'une quelconque des revendications 1 à 3 **caractérisé en ce que** les parois sont déformées avant la liaison.

5. Procédé selon l'une quelconque des revendications 1 à 4 **caractérisé en ce que** le corps creux (23, 33, 59) est calibré à une pression inteme accrue par rapport à la pression exteme.

6. Procédé selon l'une quelconque des revendications 1 à 5 en liaison avec la revendication 2 **caractérisé en ce que** l'indentation des parois est obtenue par compression d'une bague autour de la déformation et stabilisée par insertion d'un disque dans la déformation.

7. Echangeur de chaleur (23, 33, 59) comportant deux parois (13, 15) réunies l'une à l'autre et, entre elles, un espace de circulation à contre-courant, échangeur dans lequel les parois (13, 15) sont réunies ensemble en une pluralité d'emplacements de liaison (11) dans les surfaces situées entre les bords de l'échangeur de chaleur (23, 33, 59), **caractérisé en ce que** les parois (13, 15) sont indentées l'une dans l'autre aux emplacements de liaison (11) dans les surfaces situées entre les bords de l'échangeur de chaleur, et fixées l'une à l'autre par ces indentations (11).

8. Echangeur de chaleur selon la revendication 7 **caractérisé en ce que** les indentations (11) des parois (13, 15) se faisant face sont de forme annulaire.

9. Echangeur de chaleur selon la revendication 8 **caractérisé en ce qu'**il est prévu une bague (82) entourant chaque emplacement d'indentation (11).

10. Echangeur de chaleur selon l'une quelconque des revendications 7 à 9, **caractérisé en ce que** les indentations (11) sont pratiquées par un processus de refoulement par compression sans traversée de la tôle.

11. Echangeur de chaleur selon l'une quelconque des revendications 7 à 10, **caractérisé en ce qu'**au moins une paroi est réalisée en tôle de cuivre ayant en particulier une épaisseur de 0,3 à 0,8 mm et de préférence de 0,5 à 0,65 mm.

12. Echangeur de chaleur selon l'une quelconque des revendications 7 à 11, **caractérisé en ce que** les indentations (11) sont pratiquées à une distance réciproque de 10 à 50 mm et de préférence entre 20 et 30 mm.

13. Echangeur de chaleur selon l'une quelconque des revendications 7 à 12, **caractérisé en ce que** les indentations (11) sont pratiquées en rangées ou en réseaux.

14. Echangeur de chaleur selon l'une quelconque des revendications 7 à 13, **caractérisé en ce que** les indentations (11) sont pratiquées dans un enfoncement à peu près circulaire (59) de la paroi.

15. Utilisation d'un procédé de liaison de tôle par déformation par compression pour la fixation ponctuelle réciproque (11) de deux parois parallèles (13, 15) définissant un espace de circulation à contre-courant (29) d'un échangeur de chaleur selon la revendication 1.

16. Ensemble constructif pour une installation d'échange de chaleur comportant une pluralité d'échangeurs de chaleur selon l'une quelconque des revendications 6 à 12 et des éléments de liaison pour le rattachement des échangeurs de chaleur.

17. Ensemble constructif selon la revendication 16 **caractérisé en ce que** les éléments de liaison sont des jonctions par enfoncement.

18. Ensemble constructif selon l'une des revendications 16 ou 17 **caractérisé en ce qu'**il comporte une pompe.

19. Ensemble constructif selon l'une des revendications 16 à 18 **caractérisé en ce qu'**il comporte un réservoir d'eau chaude.

20. Procédé selon la revendication 1 **caractérisé en ce que** dans au moins une et de préférence dans les deux parois (13, 15) sont pratiqués par déformation de matière des enfoncements rigidifiant et circulaires (59) en des emplacements de liaison (11) situés à l'intérieur des surfaces situées entre les bords du corps creux (23, 33, 59), et les parois de tôle sont ensuite, à l'intérieur des enfoncements (59), indentées l'une dans l'autre par déformation de matière.

21. Echangeur de chaleur construit par le procédé selon la revendication 20, avec un espace de circulation à contre-courant (29) pour un agent de transport de chaleur, dans lequel deux parois sont disposées l'une en face de l'autre et sont réunies l'une avec l'autre en un corps creux (23, 33, 59) qui peut être parcouru à contre-courant, les parois, en une pluralité d'emplacements de liaison (11) situés à l'intérieur des surfaces situées entre les bords des corps creux (23, 33, 59) étant fixées l'une à l'autre, **caractérisé en ce que**, dans au moins l'une et de préférence dans les deux parois (13, 15), aux emplacements de liaison (11) situés à l'intérieur des surfaces situées entre les bords des corps creux (23, 33, 59) étant pratiqués des enfoncements (59) rigidifiants et circulaires par déformation de matière, les parois de tôle étant ensuite indentées l'une dans l'autre à l'intérieur de ces enfoncements (59) par déformation de matière.
